# EUROPEAN PATENT APPLICATION

(11) **EP 4 786 114 A1**
(43) Date of publication of application: **05.08.2026**
(21) Application number: 25225121.0
(22) Date of filing: 18.12.2025
(51) Int. Cl.: B25J 9/16, B25J 11/00, B25J 13/08, G05B 19/00

(54) **TRACKING UNIT FOR CONTACTLESS SURFACE TRACKING**

(30) Priority: 04.02.2025 US 202519044913
(71) Applicant: The Boeing Company, Arlington, VA 22202 (US)
(72) Inventor: STARR, Tyler Allan, Arlington, 22202 (US); MERCER, Michael Robert, Arlington, 22202 (US); PEEBLES, Jeffrey Wayne, Arlington, 22202 (US)
(74) Representative: Lissandrini, Marco

(57) **Abstract**

A tracking unit 20 configured to connect to a robotic device 200 and move across a surface 101 of an object 100. The tracking unit 20 includes a body 21, one or more distance sensors 30 mounted to a first side of the body 21 and configured to detect a distance from the object 100, and one or more peripheral sensors 40 mounted to a second side of the body 21 and configured to detect a peripheral feature 110. A controller 90 is configured to receive signals from the one or more distance sensors 30 and the one or more peripheral sensors 40. The controller 90 is configured to position the body 21 a fixed distance away from the object 100 and to prevent contact between the body 21 and the peripheral feature 110.

## Description

### TECHNOLOGICAL FIELD

The present disclosure relates generally to the field of devices to track across an object and, more specifically, to devices configured to detect a distance from the surface of the object and to detect peripheral features.

### BACKGROUND

There are various applications in which a device is movable over a surface of an object. One example includes a painthead with a paint nozzle that is moved over an object while painting the object. Another example includes a sensor that is moved over an object during an inspection, such as to determine wear or damage to the object. The devices are spaced away from the surface of the object during use with the distance being dependent upon the specific requirements of the operation. Some operations use a closer positioning (e.g., about 0,64-2,54 centimeters, i.e., 0.25"-1.0") with other operations use a larger spacing.

These operations can include a robotic device that moves the device over the object. This non-contact movement prevents the device for potentially damaging the object, or from damaging the device itself. Further, the contact between the device and object can stop the operation and require a reset of the robotic device which can be time consuming.

The robotic systems are configured to space the sensing devices away from the object during the movement. However, the robotic devices do not detect peripheral features that are located near the object. For example, a wall or a beam that is adjacent to the object may not be sensed and the robotic device may cause the device to collide with the peripheral feature. This collision could cause damage to one or more of the device, the peripheral feature, and the robotic device.

### SUMMARY

One aspect is directed to a tracking unit configured to connect to a robotic device and move across a surface of an object. The tracking unit comprises a body, one or more distance sensors mounted to a first side of the body and configured to detect a distance from the object, and one or more peripheral sensors mounted to a second side of the body and configured to detect a peripheral feature. A controller comprising processing circuitry is configured to receive signals from the one or more distance sensors and the one or more peripheral sensors. The controller is configured to position the body a fixed distance away from the object and to prevent contact between the body and the peripheral feature.

In another aspect, one or more distance sensors are mounted on a bottom face of the body and the one or more peripheral sensors are mounted to lateral sides of the body.

In another aspect, the one or more peripheral sensors are spaced apart around a centerline of the body.

In another aspect, an ethernet connector is operatively connected to the controller with the ethernet connector configured to enable a connection between the controller and a robotic device controller.

In another aspect, the controller is configured to maintain the body spaced a constant distance away from the object based on first inputs from the one or more distance sensors and to simultaneously space the body away from the peripheral feature based on second inputs from the one or more peripheral sensors.

In another aspect, a mount on the body is configured to connect to the robotic device with the mount is positioned on an opposing side of the body from the one or more distance sensors.

In another aspect, body comprises a main section that comprises a centerline and arms that extends outward away from the centerline with the one or more distance sensors mounted on the arms and the one or more peripheral sensors mounted on the main section.

In another aspect, a first hub connects the one or more distance sensors to the processing circuitry of the controller and a second hub connects the one or more peripheral sensors to the processing circuitry and with each of the first hub and the second hub being I2C hubs.

In another aspect, the one or more distance sensors are aligned substantially perpendicular to the one or more peripheral sensors.

One aspect is directed to a tracking unit configured to connect to a robotic device and move across a surface of an object. The tracking unit comprises distance sensors that face in a first direction and are configured to detect a distance from the object and peripheral sensors that face in a second direction and are configured to detect a distance from a peripheral feature. A controller comprises processing circuitry configured to receive signals from the distance sensors and the peripheral sensors. The signals enable the tracking unit to remain spaced away from the object and away from the peripheral feature.

In another aspect, the controller is configured to communicate with a robotic controller to control the position of the tracking unit relative to the object based on the signals from the distance sensors and to control the position of the tracking unit relative to the peripheral feature based on the signals from the peripheral sensors.

In another aspect, the tracking unit comprises a body comprising a centerline, a mount aligned along the centerline and configured to connect to the robotic device, and wherein the distance sensors face in a direction substantially perpendicular to the centerline and the peripheral sensors face in a direction substantially parallel to the centerline.

In another aspect, an ethernet connector is configured to connect the controller to a robotic device controller.

In another aspect, a number of the peripheral sensors is greater than the distance sensors.

In another aspect, the controller is configured to maintain the distance sensors a constant distance away from the object.

One aspect is directed to a method of moving a tracking unit with a robotic device relative to an object. The method comprises: moving the tracking unit across the object with the robotic device while maintaining the tracking unit spaced away from the object; detecting a peripheral feature in a direction of movement of tracking unit; determining that the peripheral feature is less than a predetermined distance away from the tracking unit; and stopping the movement of the tracking unit by the robotic device.

In another aspect, the method further comprises maintaining the tracking unit a fixed distance away from the object while moving the tracking unit across the object.

In another aspect, the method further comprises transmitting control instructions to the robotic device and causing the robotic device to move the tracking unit across the object according to the control instructions.

In another aspect, the method comprises connecting the tracking unit with an ethernet connector to a robotic controller of the robotic device.

In another aspect, stopping the movement of the tracking unit by the robotic device comprises stopping the movement of the tracking unit in the direction of movement.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is a schematic side view of a tracking unit positioned over an object and configured to be moved by a robotic device.
Figure 2A is an isometric view of a tracking unit.
Figure 2B is a side view of the tracking unit of Figure 2A.
Figure 3 is a schematic diagram of a controller of a tracking unit.
Figure 4 is a schematic diagram of distance sensors and peripheral sensors that are connected to the controller through hubs.
Figure 5 is a schematic diagram of a robotic device connected to a tracking unit and configured to move the tracking unit relative to an object.
Figure 6A is a schematic side view of a tracking unit positioned relative to an object and relative to a peripheral feature.
Figure 6B is a schematic side view of the tracking unit of Figure 6A in closer proximity to the peripheral feature.
Figure 7 is a flowchart diagram of a method of initializing a tracking unit.
Figure 8 is a flowchart diagram of a method of moving a tracking unit with a robotic device relative to an object.
Figure 9 is a schematic diagram of a controller of a robotic device.

### DETAILED DESCRIPTION

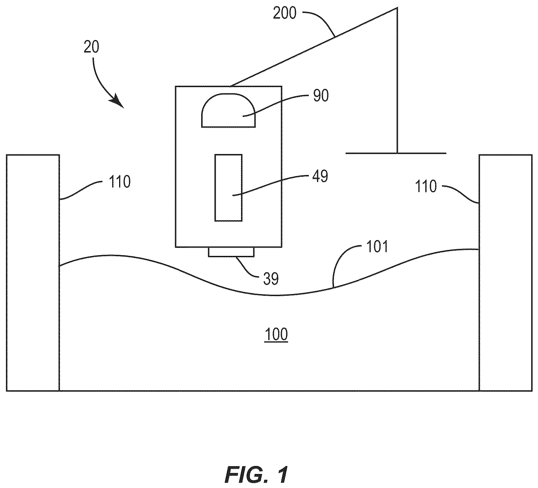

Figure 1 schematically illustrates a tracking unit 20 configured to connect to a robotic device 200 and be moved across an object 100. The tracking unit 20 includes a first sensor array 39 configured to detect the surface 101 of the object 100. The tracking unit 20 also includes a second sensor array 49 configured to detect a peripheral feature 110. The tracking unit 20 receives signals from the sensor arrays 39, 49 and communicates with the robotic device 200 to maintain the tracking unit 20 spaced away from the object 100 and peripheral features 110.

The object 100 can include various configurations. Examples include but are not limited to vehicle parts (e.g., aircraft panel, car fender), raw material (e.g., aluminum sheet), and structural components (e.g., wall of a building, surface of a test area). One or more peripheral features 110 are positioned in proximity to the object 100. In some examples, a peripheral feature is part of the object 100 that extends above the surface 101 that is being monitored by the device, such as a flange, rib, and arm of the object 100. In some examples, a peripheral feature 110 is a separate object positioned adjacent to the object, such as a frame or table that supports the object. Other examples of peripheral features 110 include but are not limited to objects within the workspace of the object 100 such as other machinery, other robotic devices, and human operators. The peripheral features 110 can be static (non-moving) or dynamic (moving).

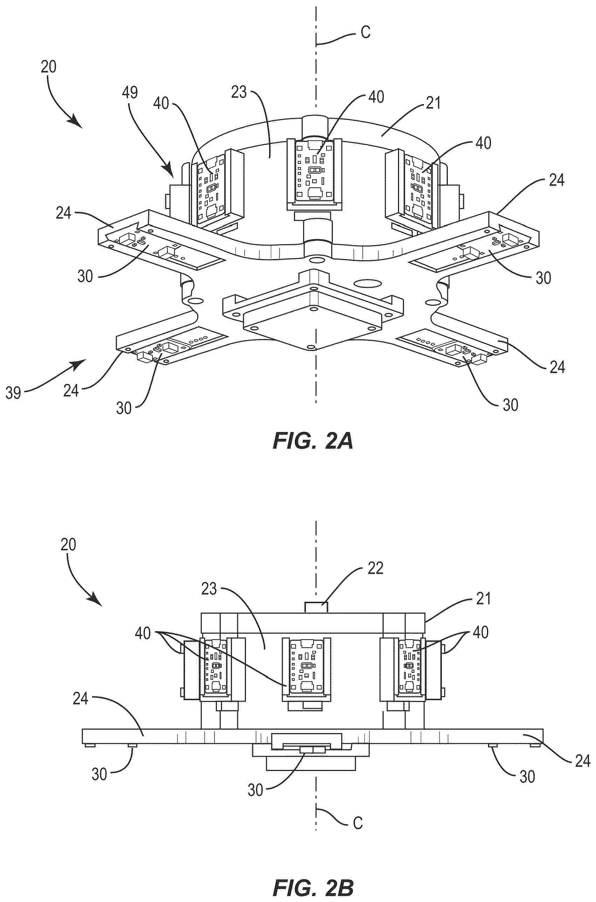

Figures 2A and 2B illustrate a tracking unit 20. The tracking unit 20 includes a body 21 with a mount 22 configured to be connected to the robotic device 200. In some examples the mount 22 is configured to connect to an end of an arm of the robotic device 200 to enable the tracking unit 20 to function as an end effector. The body 21 includes a centerline C that extends through the body 21. In some examples, the mount 22 is aligned along the centerline C.

In the example of Figures 2A and 2B, the body 21 includes a main section 23 and outwardly-extending arms 24. The main section 23 includes surfaces that are aligned in a first direction and the arms 24 include surfaces that are aligned in a different direction. In some examples, the surfaces of the main section 23 are substantially perpendicular to the surfaces of the arms 24. In the example of Figures 2A and 2B, the surfaces of the main section 23 are substantially aligned with the centerline C. In one preferred example, the surfaces of the main section 23 are also disposed in annular manner around the centerline C. Optionally, the surfaces of the main section 23 may further define a cylindrical shape having an axis corresponding to the centerline C. Additionally or alternatively the surfaces of the arms 24 extend radially, and optionally perpendicularly, from the centerline C. Preferably, the surfaces of the arms 24 are also substantially planar.

The first sensor array 39 includes one or more sensors 30 that are aligned in a first direction. In the examples of Figures 2A and 2B, the first sensors 30 are mounted to the arms 24 and face downward. The first sensor array 39 is configured to detect the surface 101 of the object 100. This detection is configured to be used to maintain the tracking unit 20 spaced away from the surface 101. The number and positioning of the sensors 30 can vary. In one example, the sensors 30 are evenly spaced-apart along the tracking unit on each of the arms 24, preferably in annular manner around the centerline C, and are aligned in an x/y plane.

The second sensor array 49 includes one or more sensors 40 (also referred to as "peripheral sensors) that are aligned in a second direction. In some examples, the sensors 40 are mounted to the surfaces of the main section 23 and face outward to detect a peripheral feature 110. The surfaces of the main section 23 define lateral sides of the body 21. The number and positioning of the sensors 40 can vary. In some examples, sensors 40 are evenly spaced apart around the main section 23 and face outward from the centerline C. The main section 23 and/or the related surfaces can be realized in accordance with the features already described in the previous paragraphs.

A variety of different types of sensors 30, 40 can be used on the tracking unit 20. One example includes sensors that use magnetic fields to sense the object. The sensors include one or more photoresistors, infrared transceivers, and ultrasonic sensors. Other examples include infrared transceivers that measure and detect infrared radiation. In some examples, the infrared transceivers are active sensors that both emit and detect infrared radiation and include a light-emitting diode and a receiver. Other infrared sensors are passive that just detect the infrared radiation. Other examples include ultrasonic sensors that emit ultrasonic sound waves and determine a distance by detecting reflected signals. In some examples, the sensors 30, 40 include one or more cameras that capture images including individual still images and video images. The camera can include a single sensor element that is configured to produce two-dimensional images, or one with multiple elements to capture three-dimensional images. In some examples, the sensors 30, 40 utilize LIDAR.

In some examples, the sensors 30 are each the same, with other examples including two or more different types of sensors. Likewise, sensors 40 can each be the same, or can include multiple different types of sensors. The sensors 30, 40 can be the same or different.

The sensors 30, 40 sense their surroundings at various frequencies. The sensors 30, 40 provide realtime feedback that enable the tracking unit 20 to be moved without contacting the object 100 or peripheral feature 110. In some examples, the sensors 30, 40 monitor their surroundings and provide signaling at regular intervals. Sensors 30, 40 can increase or decrease the frequency of the signaling upon the occurrence of predetermined events, such as increasing the frequency when the sensors 30, 40 detect the tracking unit 20 is within a predetermined range of the peripheral feature 110.

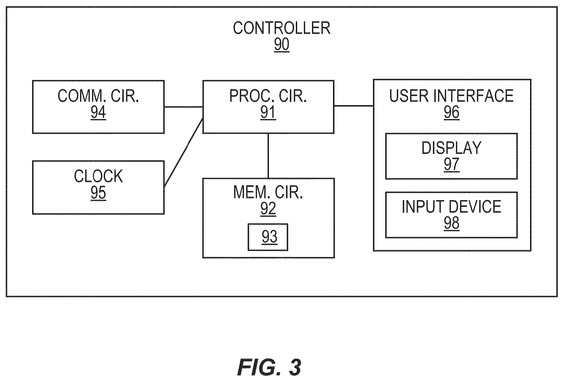

The tracking unit 20 includes a controller 90 to control the movement of the tracking unit 20. In some examples, the controller 90 is mounted within the interior of the body 21 to protect the various components. Other examples include the controller 90 being remote from the body 21. Figure 3 schematically illustrates a controller 90 that includes processing circuitry 91 that operates according to program instructions 93 stored in memory circuitry 92. The processing circuitry 91 includes one or more circuits, microcontrollers, microprocessors, hardware, or a combination thereof. The processing circuitry 91 can include various amounts of computing power to provide the needed functionality.

Memory circuitry 92 includes a non-transitory computer readable storage medium storing program instructions 93, such as a computer program product, that configures the processing circuitry 91 to implement one or more of the techniques discussed herein. Memory circuitry 92 can include various memory devices such as, for example, read-only memory, and flash memory. Memory circuitry 92 can be a separate component as illustrated in Figure 3 or can be incorporated with the processing circuitry 91. Alternatively, the processing circuitry 91 can omit the memory circuitry 92, e.g., according to at least some embodiments in which the processing circuitry 91 is dedicated and non-programmable.

Communication circuitry 94 provides for sending and/or receiving signals from one or more of the components of the system. Components include but are not limited to the sensors 30, 40, and the robotic device 200. The communication circuitry 94 can provide for one-way communications or two-way communications that are both to and from the components. Communication circuitry 94 can also provide for communication to and from the controller 90 with a remote node (e.g., operator equipment, server, database). A clock 95 is used to tracking the timing of movement of the robot 40 and/or tracking unit 20.

A user interface 96 provides for a user to control one or more aspects of the system during operation. The user interface 96 includes one or more input devices 98 such as but not limited to a keypad, touchpad, roller ball, and joystick. The user interface 96 also includes one or more displays 97 for displaying information regarding the testing and/or for an operator to enter commands to the processing circuitry 91.

In some examples, the tracking unit 20 includes a power source such as one or more batteries to electrically power one or more of the components. Additionally or alternatively, the tracking unit 20 receives power from the robotic device 200, such as through connector 85 and/or separate connectors.

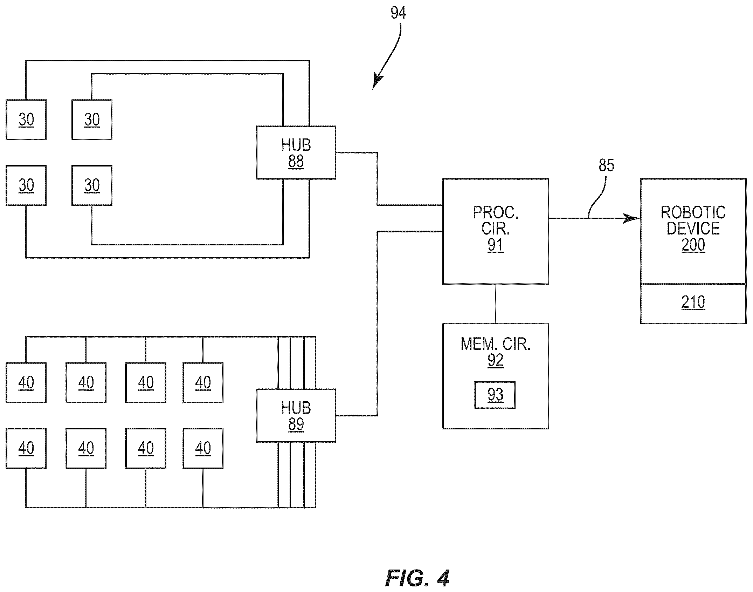

Figure 4 illustrates a configuration in which the communication circuitry 94 includes a hub 88 for communication with the sensors 30 and hub 89 for communication with the sensors 40. Hubs 88, 89 include individual ports to communicate with the respective sensors 30, 40 on the same bus (e.g., I2C bus). The hubs 88, 89 provide the data from the sensors 30, 40 to the processing circuitry 91. A connector 85 enables connection to the robotic device 200. In some examples, the connector 85 is an Ethernet connector. The robotic device 200 includes a controller 210 that controls the movement of the robotic device 200. The connector 85 can also provide power from the robotic device 200 to the tracking unit 20 to operate one or more of the components.

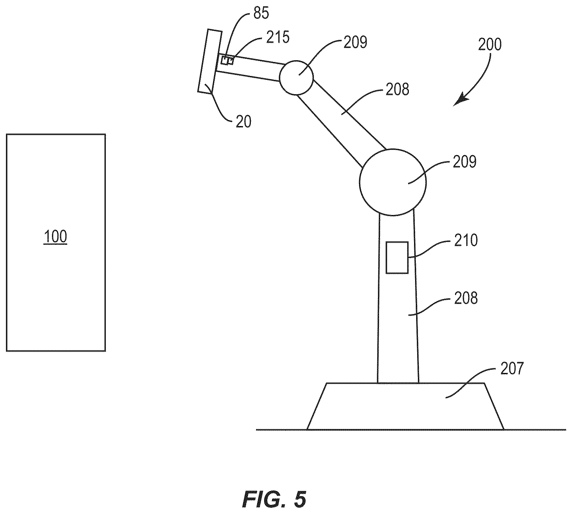

Figure 5 illustrates a robotic device 200 configured to move the tracking unit 20. The robotic device 200 includes a base 207 that supports one or more linkages 208. The base 207 can be configured to be positioned at a fixed location or can include wheels or otherwise be movable relative to the object 100. Articulating joints 209 provide for relative movement between the linkages 208 and/or the tracking unit 20. The size, shape, and movement capabilities of the robotic device 200 can vary depending upon the type of job being performed. In some examples, the robotic device 200 enables movement within one or more of six different axes (i.e., a 6-axis device). In some examples, the robotic device 200 is a cobot (collaborative robot) that works with or near human operators in a shared workspace.

The tracking unit 20 is physically connected to the robotic device 200 at the mount 22. The connector 85 enables the tracking unit 20 to be electronically connected at a robotic device connector 215 to enable communication with the robotic device controller 210. In some examples, the tracking unit 20 through the controller 90 controls the operation of the robotic device 200. In other examples, the robotic device 200 is controlled by controller 210 which receives data from the sensors 30, 40 to determine the movement.

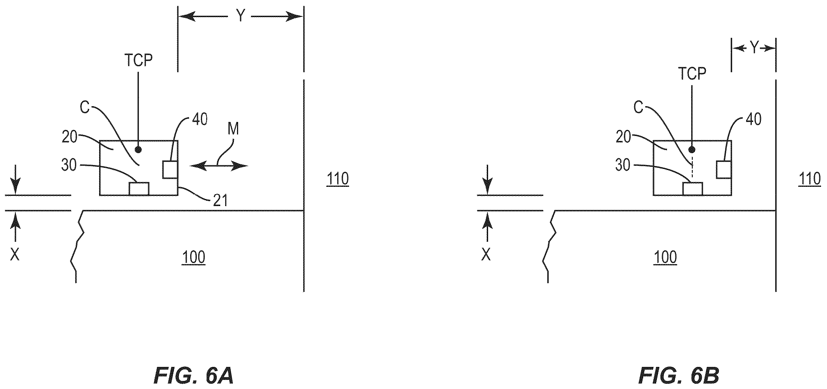

The tracking unit 20 is moved across the object 100 during the operation as illustrated in Figures 6A and 6B. As illustrated in Figure 6A, one or more sensors 30 are positioned to detect the distance X between the body 21 and the surface of the object 100. During the movement of the tracking unit 20 illustrated by arrow M, the signals from the sensors 30 maintain the spacing and prevent contact with the object 100. The distance X can be the same during the movement M, or can vary. In some examples, the signals from the sensors 30 also enable the tracking unit 20 to maintain an orientation that is tangent to the surface of the object 100.

One or more sensors 40 detect a distance from one or more peripheral features 110. This enables the tracking unit 20 to be moved about the object to maintain a distance Y away from the peripheral feature 110. This buffer zone measured by distance Y is a safety zone that prevents the tracking unit 20 from getting within a predetermined distance from the peripheral feature 110. When the tracking unit 20 is moved within a predetermined distance of the peripheral feature 110 as illustrated in Figure 6B, the movement M in the direction towards the peripheral feature 110 is prevented. This provides for collision avoidance protection that prevents contact between the tracking unit 20 and the peripheral feature 110. In some examples, the robotic device 200 completely stops movement of the tracking unit 20 when the tracking unit 20 is within the safety zone. In other examples, the robotic device 200 stops movement towards the peripheral feature 110, but allows movement in other directions that are away from the peripheral feature 110.

The distances X and Y can be measured from different locations on the tracking unit 20. In some examples, a tool center point TCP is determined for the body 21 of the tracking unit 20. The position of the tracking unit 20 is determined based on the TCP. In other examples, the distance X between the tracking unit 20 and object 100 is determined from an edge of the body 21 that is closest to the object 100 and where the sensors 30 are mounted. Likewise, the distance Y between the tracking unit 20 and peripheral feature 110 is determined from the edge that is closest to the peripheral feature 110 and where the sensors 40 are mounted.

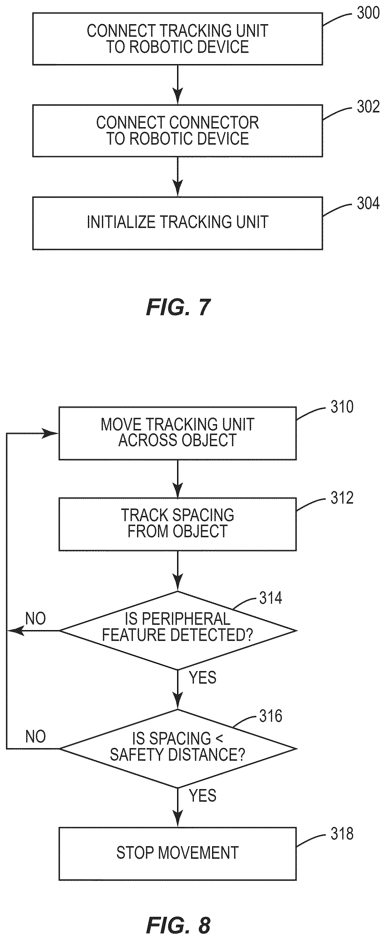

Figure 7 illustrates a process in which the tracking unit 20 is initially put into use. The tracking unit 20 is attached to the robotic device (block 300). In some examples, this includes connecting the mount 22 to the end of the robotic device 200. The connection also includes connecting the tracking device controller 90 to the robotic device controller 210 by engaging the tracking unit connector 85 to the robotic device connector 215 (block 302). Once the tracking unit 20 is connected, the tracking unit 20 is initialized (block 304). Initialization can include moving the tracking unit 20 across the object 100 and determining the spacing from the object 100. The movement can also include moving the tracking unit 20 to a location where the sensors 40 detect a peripheral feature 110. The location of the tracking unit 20 is monitored during the initialization to determine that the spacing corresponds to expected results. The initialization process can be performed by one or both of the tracking device controller 90 and the robotic device controller 210.

Figure 8 illustrates a method of operating the tracking unit 20 on an object 100. The tracking unit 20 is moved across the object 100 by the robotic device (block 310). During the movement, sensors 30, 40 monitor the spacing respectively from the object 100 and a peripheral feature 110 (block 312). In some examples, the tracking unit 20 is moved along the object 100 at a constant distance away from the object 100. In some examples, the signaling from the sensors 30 also enables the movement of the tracking unit 20 to be tangent to a curved surface of the object 100.

During the movement, the sensors 40 monitor for one or more peripheral features 110 (block 314). If no peripheral feature 110 is detected, the movement across the object 100 continues. If a peripheral feature 110 is detected, the distance from the tracking unit 20 is determined (block 316). If the distance is greater than a predetermined safety zone distance, the movement of the object 100 continues. If the distance is less than the safety zone, the movement of the tracking unit 20 is stopped (block 318). Stopping the movement prevents a collision between the tracking unit 20 and the peripheral feature 110.

One specific example of use of the tracking unit includes multiple sensors 30 (e.g., four sensors) mounted in an X-Y plane on the body 21. Distances from the object 100 are detected and sent to the controller 90. The controller 90 calculates a roll angle to balance the sensors 30 in the X axis and the Y axis. Roll commands are sent through the ethernet connector 85 to enable the controller 210 to adjust the movement in real time based on the sensor input. This monitoring occurs on a constant loop to enable the controller 210 to continually adjust to the shape of the object 100 as the tracking unit 20 is moved along the movement path M. In some examples, the distance from the object 100 is calculated using a minimum number of inputs from different sensors 30.

In addition to the sensors 30, the same type of sensors 40 are arranged in a circular array on the body 21, such as on the main section 23. Each sensor 40 is aligned to be perpendicular to a plane in which sensors 40 are aligned. Sensors 40 are configured to read a peripheral view of the tool path M. A threshold value is set for a safety zone for a peripheral feature 110. When sensors 40 detect that the tracking unit 20 enters the safety zone, a stop command is triggered to the robotic device 200. The stop command overrides other movement until the peripheral feature 110 is cleared from the safety zone.

In some examples, the tracking unit 20 is self-contained such that the inputs from the sensors 30, 40, spacing calculations, and control logic are performed by the controller 90. The controller 90 then signals the controller 210 of the robotic device 200 which is configured to receive and operate according to the external commands. This configuration enables the tracking unit 20 to be easily swappable and able to be connected to different robotic devices 200.

In other examples, the controller 90 signals one or more controls and/or sensor inputs to the robotic device controller 210. The control logic is determined by the controller 210 which controls the movement and operation of the robotic device 200 to maintain the spacing relative to the object 100 and to peripheral feature 110.

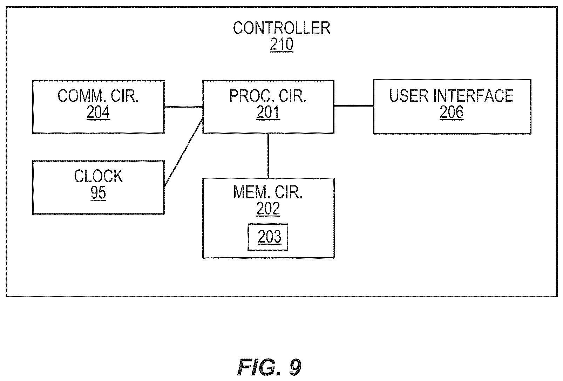

Figure 9 schematically illustrates the robotic device controller 210. Controller 210 includes processing circuitry 201 that includes one or more circuits, microcontrollers, microprocessors, hardware, or a combination thereof. The processing circuitry 201 can include various amounts of computing power to provide the needed functionality. Memory circuitry 202 includes a non-transitory computer readable storage medium storing program instructions 203, such as a computer program product, that configures the processing circuitry 201 to implement one or more of the techniques discussed herein. Memory circuitry 202 can include various memory devices such as, for example, read-only memory, and flash memory.

Communication circuitry 204 provides for sending and/or receiving signals from the controller 90 of the tracking unit 20. Communication circuitry 204 can also enable communication with remote nodes, such as but not limited to operators, other robotic devices, server, and remote database.

A user interface 206 provides for an operator to control one or more aspects of the system during operation. The user interface 2066 includes one or more input devices such as but not limited to a keypad, touchpad, roller ball, and joystick. The user interface 206 also includes one or more displays for displaying information regarding the testing and/or for an operator to enter commands to the processing circuitry 201.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

Spatially relative terms such as "under", "below", "lower", "over", "upper", and the like, are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

The presently claimed invention may, of course, be carried out in other ways than those specifically set forth herein without departing from essential characteristics of the claimed invention. The present embodiments are to be considered in all respects as illustrative and not restrictive, and all changes coming within the meaning and equivalency range of the appended claims are intended to be embraced therein.

Where a quantity is specified in both the SI system and United States customary units and there is any discrepancy, the values expressed in United States customary units shall take precedence.

## Claims

1. A tracking unit (20) configured to connect to a robotic device (200) and move across a surface (101) of an object (100), the tracking unit (20) comprising:
a body (21);
one or more distance sensors (30) mounted to a first side of the body (21), the one or more distance sensors (30) configured to detect a distance from the object;
one or more peripheral sensors (40) mounted to a second side of the body (21), the one or more peripheral sensors (40) configured to detect a peripheral feature (110); and
a controller (90) comprising processing circuitry (91) configured to receive signals from the one or more distance sensors (30) and the one or more peripheral sensors (40), the controller (90) configured to position the body (21) a fixed distance away from the object and to prevent contact between the body (21) and the peripheral feature (110).

2. The tracking unit (20) of claim 1, wherein the one or more distance sensors (30) are mounted on a bottom face of the body (21) and the one or more peripheral sensors (40) are mounted to lateral sides of the body (21).

3. The tracking unit (20) of claim 2, wherein the one or more peripheral sensors (40) are spaced apart around a centerline of the body (21), and preferably wherein the one or more peripheral sensors (40) are configured to detect a distance from one or more peripheral features (110).

4. The tracking unit (20) of any one of claims 1 to 3, further comprising an ethernet connector (85) that is operatively connected to the controller (90) with the ethernet connector (85) configured to enable a connection between the controller (90) and a robotic device (200) controller (210).

5. The tracking unit (20) of any one of claims 1 to 4, wherein the controller (90) is configured to maintain the body (21) spaced a constant distance away from the object (100) based on first inputs from the one or more distance sensors (30) and to simultaneously space the body (21) away from the peripheral feature (110) based on second inputs from the one or more peripheral sensors (40).

6. The tracking unit (20) of any one of claims 1 to 5, further comprising a mount (22) on the body (21) that is configured to connect to the robotic device (200), wherein the mount (22) is positioned on an opposing side of the body (21) from the one or more distance sensors (30).

7. The tracking unit (20) of any one of claims 1 to 6, wherein the body (21) comprises a main section (23) that comprises a centerline (C) and arms (24) that extends outward away from the centerline (C), wherein the one or more distance sensors (30) are mounted on the arms (24) and the one or more peripheral sensors (40) are mounted on the main section (23).

8. The tracking unit (20) of any one of claims 1 to 7, further comprising a first hub (88) that connects the one or more distance sensors (30) to the processing circuitry (91) of the controller (90) and a second hub (89) that connects the one or more peripheral sensors (40) to the processing circuitry (91), wherein each of the first hub (88) and the second hub (89) are I2C hubs.

9. The tracking unit (20) of any one of claims 1 to 8, wherein the one or more distance sensors (30) are aligned substantially perpendicular to the one or more peripheral sensors (40).

10. The tracking (20) unit of any one of claims 1 to 9, wherein a number of the peripheral sensors (40) is greater than a number of the distance sensors (30).

11. A method of moving a tracking unit (20) with a robotic device (200) relative to an object (100), the method comprising:
moving the tracking unit (20) across the object with the robotic device (200) while maintaining the tracking unit (20) spaced away from the object (100);
detecting a peripheral feature (110) in a direction of movement of tracking unit (20);
determining that the peripheral feature (110) is less than a predetermined distance away from the tracking unit (20); and
stopping the movement of the tracking unit (20) by the robotic device (200).

12. The method of claim 11, further comprising maintaining the tracking unit (20) a fixed distance away from the object while moving the tracking unit (20) across the object.

13. The method of claim 11 or 12, further comprising transmitting control instructions to the robotic device (200) and causing the robotic device (200) to move the tracking unit (20) across the object according to the control instructions.

14. The method of any one of claims 11 to 13, further comprising connecting the tracking unit (20) with an ethernet connector (85) to a robotic controller (210) of the robotic device (200).

15. The method of any one of claims 11 to 14, wherein stopping the movement of the tracking unit (20) by the robotic device (200) comprises stopping the movement of the tracking unit (20) in the direction of movement.
